# EUROPEAN PATENT APPLICATION

(11) **EP 1 526 280 A1**
(43) Date of publication of application: **27.04.2005**
(21) Application number: 03024468.5
(22) Date of filing: 23.10.2003
(51) Int. Cl.: F04B 27/10, F16J 15/32

(54) **Shaft seal, compressor having the same and method for sealing shaft**

(71) Applicant: Kabushiki Kaisha Toyota Jidoshokki, Kariya-shi, Aichi-ken (JP)
(72) Inventor: Yokomachi, Naoya, Kariya-shi Aichi-ken (JP); Yamada, Takeshi, Kariya-shi Aichi-ken (JP); Koide, Tatsuya, Kariya-shi Aichi-ken (JP)
(74) Representative: Leson, Thomas Johannes Alois, Dipl.-Ing.

(57) **Abstract**

A shaft seal for sealing an outer circumferential surface of a rotary shaft to a housing includes a lip seal. The lip seal includes a lip body, a lip portion, a support portion and a receiving portion. The lip body is fixed at a housing side. The lip portion extends from the lip body and has inner and outer circumferential surfaces. The inner circumferential surface of the lip portion is in contact with the outer circumferential surface of the rotary shaft. The lip portion is deformable. The support portion is formed at the outer circumferential surface side of the lip portion for applying tensile force to the lip portion when the lip portion is deformed toward the inner circumferential surface side of the lip portion. The receiving portion is formed at the outer circumferential surface side of the lip portion for receiving the pressure in the housing.

## Description

### BACKGROUND OF THE INVENTION

The invention relates to a shaft seal that seals the outer circumferential surface of a rotary shaft to a housing, for example, to a shaft seal that is suitable for sealing the outer circumferential surface of the drive shaft of a compressor to a housing.

Conventionally, for example, in a compressor, a shaft seal is interposed between a drive shaft that drives a compression mechanism and a housing so as to seal the outer circumferential surface of the drive shaft to the housing. In the shaft seal, a lip portion of a lip seal made of rubber or resin is in contact with the outer circumferential surface with predetermined elastic force. Therefore, the shaft seal prevents refrigerant in the housing from leaking to the outside of the housing along the outer circumferential surface of the drive shaft. Since such a lip seal is utilized in severe environments, such as high pressure, high speed and high temperature, excellent thermal resistance and excellent abrasion resistance are required. Particularly, when the pressure in the housing is relatively high, the force resulting from the pressure in the housing is applied to the lip portion, which is in contact with the outer circumferential surface of the drive shaft, from the outer circumferential surface side of the lip portion. The lip portion is deformed toward the inner circumferential surface side of the lip portion. The contact area of the lip portion with the outer circumferential surface of the drive shaft becomes large, and abnormal abrasion is caused.

In order to solve such a problem, for example, a shaft seal as disclosed in Japanese Unexamined Patent No. 2001-193842 is proposed. In the shaft seal, a reinforcing member that is made of resin and the flexural strength of which is larger than that of the lip portion is insert-molded into the lip portion of the lip seal, or the outer circumferential surface of the lip portion is covered with a reinforcing member. Therefore, the deformation of the lip portion caused by the high pressure is suppressed.

In the above shaft seal, the deformation of the lip portion caused by the high pressure in the housing is suppressed by increasing the flexural strength of the lip portion by the reinforcing member. Therefore, the above shaft seal is significantly effective for decreasing or stopping the abnormal abrasion. On the contrary, it is possible to deteriorate the flexibility of the lip portion.

### SUMMARY OF THE INVENTION

The present invention provides a shaft seal, in which the flexibility of a lip portion of a lip seal can be maintained and the deformation of the lip portion can be suppressed, for sealing the outer circumferential surface of a rotary shaft to a housing by contacting the lip portion with the outer circumferential surface of a drive shaft.

In accordance with the present invention, a shaft seal for sealing an outer circumferential surface of a rotary shaft to a housing includes a lip seal. The lip seal includes a lip body, a lip portion, a support portion and a receiving portion. The lip body is fixed at a housing side. The lip portion extends from the lip body and has inner and outer circumferential surfaces. The inner circumferential surface of the lip portion is in contact with the outer circumferential surface of the rotary shaft. The lip portion is deformable. The support portion is formed at the outer circumferential surface side of the lip portion for applying tensile force to the lip portion when the lip portion is deformed toward the inner circumferential surface side of the lip portion. The receiving portion is formed at the outer circumferential surface side of the lip portion for receiving the pressure in the housing.

The present invention also provides a method for sealing an outer circumferential surface of a rotary shaft to a housing. The method comprising the steps of interposing a lip seal having a lip portion between the housing and the rotary shaft, contacting the lip portion with an outer circumferential surface of the rotary shaft, forming a support portion at an outer circumferential surface side of the lip portion so as to apply tensile force to the lip portion when the lip portion is deformed toward an inner circumferential surface side of the lip portion, and forming a receiving portion at the outer circumferential surface side of the lip portion so as to receive the pressure in the housing.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a longitudinal cross-sectional view of a variable displacement compressor of a preferred embodiment according to the present invention;
FIG. 2 is a partially enlarged view of FIG. 1 showing a shaft seal of the preferred embodiment according to the present invention;
FIG. 3 is a partially enlarged cross-sectional view of the compressor showing the whole of the shaft seal in the direction of the arrow I in FIG. 2.
FIG. 4 is a cross-sectional view showing a first lip seal of a first alternative preferred embodiment according to the present invention;
FIG. 5 is a cross-sectional view showing a first lip seal of a second alternative preferred embodiment according to the present invention;
FIG. 6 is a cross-sectional view showing a first lip seal of a third alternative preferred embodiment according to the present invention;
FIG. 7 is a cross-sectional view showing a first lip seal of a fourth alternative preferred embodiment according to the present invention;
FIG. 8 is a cross-sectional view showing a first lip seal of a fifth alternative preferred embodiment according to the present invention;
FIG. 9 is a cross-sectional view showing a first lip seal of a sixth alternative preferred embodiment according to the present invention; and
FIG. 10 is a perspective view of a support portion utilized in the first lip seal of the sixth alternative preferred embodiment according to the present invention.

### DETAILED DESCRIPTION OF THE PREFERRED EMBODIMENTS

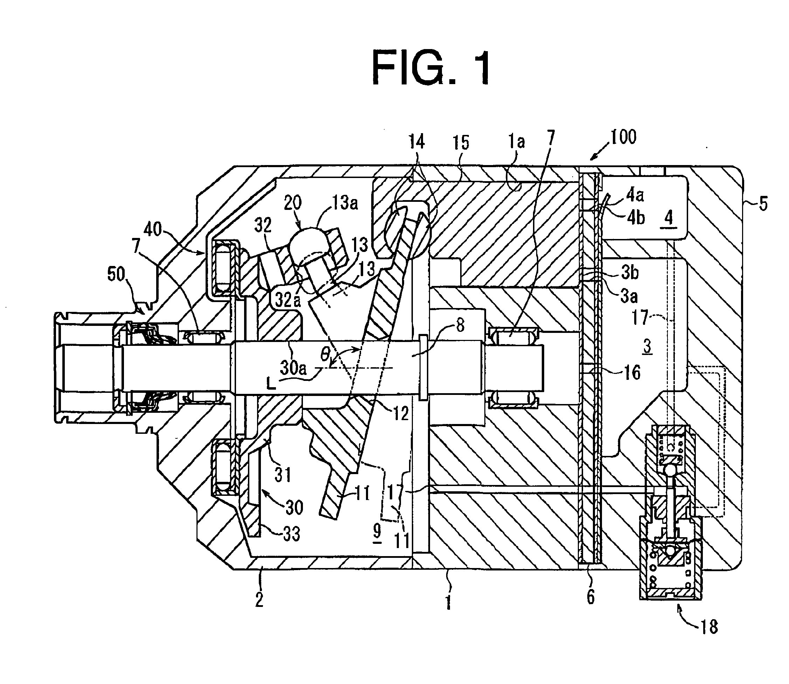

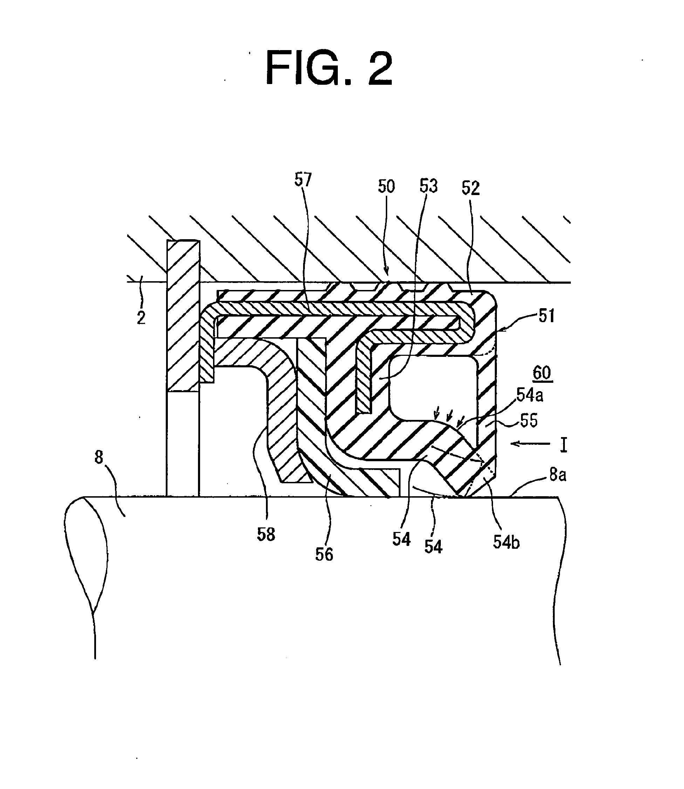

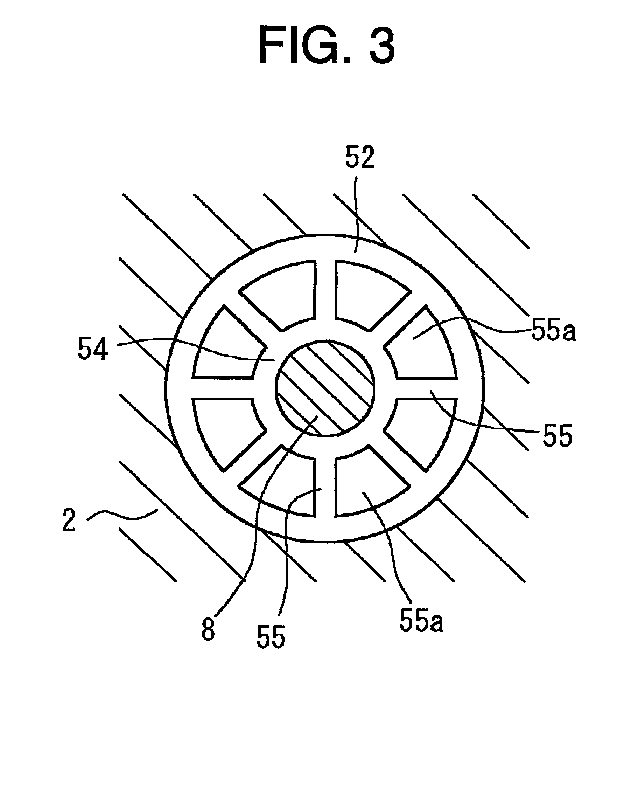

A preferred embodiment according to the present invention will now be described by referring to FIGs. 1 through 3. A clutchless type variable displacement compressor is described in the preferred embodiment. FIG. 1 is a longitudinal cross-sectional view of a variable displacement compressor 100 of the preferred embodiment. FIG. 2 is a partially enlarged view of FIG.1. FIG. 3 is a view in the direction of the arrow I in FIG. 2. In FIG. 1, the left side and the right side respectively correspond to the front side and the rear side.

As shown in FIG. 1, a clutchless variable displacement compressor 100 includes a cylinder block 1, a front housing 2 and a rear housing 5. The front housing 2 is fixed to the front side of the cylinder block 1. The rear housing 5 is fixed to the rear side of the cylinder block 1. A valve plate assembly 6 is interposed between the cylinder block 1 and the rear housing 5. The rear housing 5 and the valve plate assembly 6 define a suction chamber 3 and a discharge chamber 4. Refrigerant is introduced into the suction chamber 3 and is compressed. The compressed refrigerant is discharged into the discharge chamber 4. A suction port 3a is formed in the valve plate assembly 6 and interconnects the suction chamber 3 with a cylinder bore 1a, which is formed in the cylinder block 1, through a suction valve 3b. A discharge port 4a is formed in the valve plate assembly 6 and interconnects the discharge chamber 4 with the cylinder bore 1 a through a discharge valve 4b. A bleed passage 16 is formed in the valve plate assembly 6 and interconnects the suction chamber 3 with a crank chamber 9 that is defined by the cylinder block 1 and the front housing 2.

A drive shaft 8 is inserted through the cylinder block 1 and the front housing 2. The drive shaft 8 corresponds to a rotary shaft of the present invention. The drive shaft 8 is supported by the cylinder block 1 and the front housing 2 through two bearings 7 that are respectively arranged in the cylinder block 1 and the front housing 2. The drive shaft 8 is directly coupled to a vehicle engine as an external drive source, which is not shown in the drawings, without a clutch mechanism. The drive shaft 8 is driven by the rotation of the vehicle engine. The rotation of the drive shaft 8 drives a compression mechanism that is placed in the housing for compressing the refrigerant and that includes a piston 15 as will be described later.

A disc-shaped rotary swash plate 11 is accommodated in the crank chamber 9. A through hole 12 is formed substantially at the center of the swash plate 11. The drive shaft 8 is interposed through the shaft hole 12. A pair of pins 13 is fixed to the front side of the swash plate 11. Each of the pins 13 has a substantially spherical portion 13a at its top end. A rotor 30 is secured to the drive shaft 8 and is integrally rotated with the drive shaft 8. The rotor 30 has a disc-shaped lug plate 31, a pair of support arms 32 and a balance weight 33. A through hole 30a is formed in the lug plate 31, and the drive shaft 8 is inserted through the through hole 30a.

The rotor 30 is connected with the swash plate 11 through a hinge mechanism 20. The support arms 32 of the rotor 30 respectively engage with the pins 13 on the side of the swash plate 11, thereby, constituting the hinge mechanism 20. Each of the support arms 32 has a support hole 32a whose shape corresponds to the spherical portion 13a of the pin 13. The spherical portion 13a is inserted into the support hole 32a. In this state, the support arm 32 supports the pin 13 while the pin 13 is slidable with respect to the support hole 32a. Therefore, while the support arm 32 engages with the pin 13, the hinge mechanism 20 transmits the rotating torque of the drive shaft 8 to the swash plate 11 and allows the swash plate 11 to incline with respect to a rotary axis L of the drive shaft 8. Namely, the swash plate 11 is slidable and inclinable with respect to the drive shaft 8.

A plurality of the cylinder bores 1a is circumferentially disposed in the cylinder block 1 at a regular interval. The piston 15 is slidably inserted into each of the cylinder bores 1a. Each of the pistons 15 is connected to the swash plate 11 through a pair of shoes 14 at the front side of the piston 15. Thereby, the rotational movement of the swash plate 11 is converted into the reciprocating movement of the piston 15 in the corresponding cylinder bore 1 a while the swash plate 11 is rotated in accordance with the rotation of the drive shaft 8. in accordance with the reciprocating movement of the piston 15, the refrigerant is introduced into the cylinder bores 1a from the suction chamber 3 and is compressed. The compressed refrigerant is discharged from the cylinder bores 1a to the discharge chamber 4.

A thrust bearing 40 is interposed between the rotor 30 and the front housing 2 and is in contact with the front side of the lug plate 31. The front housing 2 receives compression reactive force, which is generated in compressing the refrigerant by the piston 15. The compression reactive force travels through the piston 15, the shoes 14, the swash plate 11, the hinge mechanism 20 and the thrust bearing 40.

Displacement of the compressor 100 is determined by stroke of the piston 15 or a distance between the top dead center and the bottom dead center of the piston 15. The stroke of the piston 15 is determined by an inclination angle θ of the swash plate 11 with respect to the rotary axis L of the drive shaft 8. Namely, as the inclination angle θ of the swash plate 11 becomes large, the stroke of the piston 15 and the discharge amount of the refrigerant also become large. On the other hand, as the inclination angle θ of the swash plate 11 becomes small, the stroke of the piston 15 and the discharge amount of the refrigerant become small. The inclination angle θ of the swash plate 11 is determined by pressure differential between the cylinder bores 1 a and the crank chamber 9. The above pressure differential is regulated by a displacement control valve 18. In FIG. 1, the inclination angle θ of the swash plate 11 is at the largest angle. Namely, in the above state, the displacement of the compressor 100 is the largest, and load on the compressor 100 is relatively high. In contrast, when the load on the compressor 100 is relatively low, the swash plate 11 is located at a position indicated by the two-dot chain line as shown in FIG. 1.

A supply passage 17 is formed in the cylinder block 1 and the rear housing 5 and interconnects the discharge chamber 4 with the crank chamber 9. The displacement control valve 18 is located on the supply passage 17. The displacement control valve 18 is an electromagnetic valve and adjusts the opening degree of the supply passage 17. The pressure in the crank chamber 9 is varied by adjusting the opening degree of the supply passage 17. Thereby, the pressure differential between the cylinder bores 1 a and the crank chamber 9 is regulated. As a result, the inclination angle of the swash plate 11 is varied, and the stroke of the piston 15 is varied. Ultimately, the displacement of the compressor 100 is regulated.

Next, a shaft seal 50 that is a characteristic part of the present preferred embodiment will be described by referring to FIGs. 2 and 3. As shown in FIG. 2, the shaft seal 50 is interposed between the front housing 2 and the drive shaft 8 for sealing the outer circumferential surface of the drive shaft 8 to the front housing 2. The shaft seal 50 includes first and second lip seals 51 and 56 as well as first and second metal retainers 57 and 58. The first and second lip seals 51 and 56 are in contact with the outer circumferential surface 8a of the drive shaft 8. The first lip seal 51, for example, is made of rubber and is arranged at the side of the crank chamber 9. The first lip seal corresponds to a lip seal of the present invention. The second lip seal 56, for example, is made of resin and is interposed between the first lip seal 51 and the metal retainer 58. The first and second metal retainers 57 and 58 are made of metal. The first metal retainer 57 holds the first lip seal 51. The second metal retainer 58 holds the second lip seal 56. An annular seal chamber 60 is formed between the front housing 2 and the drive shaft 8 at the outer circumferential surface side of the first lip seal 51 and communicates with the crank chamber 9. Therefore, the first lip seal 51 experiences the pressure in the crank chamber 9 through the seal chamber 60. The pressure in the seal chamber 60 corresponds to the pressure in a housing in the present invention.

The seal chamber 60 is formed by the front housing 2. When the shaft seal 50 is assembled between the front housing 2 and the drive shaft 8, more particularly when the shaft seal 50 is mounted around the drive shaft 8, the first and second lip seals 51 and 56 are radially pressed by the circumferential surface 8a of the drive shaft 8. In this state, the first and second lip seals 51 and 56 apply predetermined elastic force (clamping force) to the outer circumferential surface 8a of the drive shaft 8. The above elastic force seals the outer circumferential surface 8a of the drive shaft 8 to the front housing 2 and prevents the refrigerant from leaking from the seal chamber 60 to the outside of the compressor 100 along the circumferential surface 8a of the drive shaft 8.

The first lip seal 51 includes a cylindrical fixed portion 52, a disc portion 53 and a lip portion 54. The fixed portion 52 is fittingly fixed to the inner circumferential surface of the housing 2 in the seal chamber 60 formed by the front housing 2. The disc portion 53 extends from the fixed portion 52 inwardly. The fixed portion 52 and the disc portion 53 correspond to a lip body of the present invention. The lip portion 54 extends from the disc portion 53 inwardly. The inner circumferential surface of the lip portion 54 is in contact with the outer circumferential surface of the drive shaft 8. The lip portion 54 is deformable and forms substantially funnel in shape, the inner diameter of which gradually is reduced toward the top end of the lip portion 54. As shown in FIG. 3, a plurality of support portions 55 is arranged in the circumferential direction of the lip portion 54 at a regular interval between an outer circumferential surface 54a of the lip portion 54 and the inner circumferential surface of the fixed portion 52 at a top portion 54b of the lip portion 54. In the present preferred embodiment, the number of the support portions 55 is eight. Each of the support portions 55 forms a rod having a rectangular or circular transverse cross section in shape and extends in the radial direction of the first lip seal 51. Namely, the support portion 55 connects the outer circumferential surface 54a of the lip portion 54 with the inner circumferential surface of the fixed portion 52.

In the present preferred embodiment, the support portion 55 is formed integrally with the fixed portion 52 and the lip portion 54 upon forming the first lip seal 51. The force resulting from the pressure in the seal chamber 60 is applied to the outer circumferential surface 54a of the lip portion 54 through spaces 55a that are formed between the support portions 55. Namely, the force resulting from the pressure in the seal chamber 60 is applied to the whole outer circumferential surface 54a of the lip portion 54 other than the part of outer circumferential surface 54a of the lip portion 54 corresponding to where the support portions 55 are arranged. The whole outer circumferential surface 54a of the lip portion 54 other than the above part of outer circumferential surface 54a of the lip portion 54, to which the force resulting from the pressure in the seal chamber 60 is applied, corresponds to a receiving portion of the present invention.

In the present preferred embodiment, the support portion 55 is formed at the lip portion 54 of the first lip seal 51. When the lip portion 54 is deformed toward the inner circumferential surface side of the lip portion 54, or toward the outer circumferential surface side of the drive shaft 8, by the force resulting from the pressure in the seal chamber 60 that is applied to the outer circumferential surface 54a of the lip portion 54, the deformation is suppressed by elastically pulling the lip portion 54 from the outer circumferential surface side of the lip portion 54 by the support portion 55. Namely, when the lip portion 54 is deformed toward the inner circumferential surface side of the lip portion 54, the support portion 55 applies tensile force to the lip portion. At this time, the support portion 55 functions as an elastic member. In this case, suppressing the deformation of the lip portion 54 by the support portion 55 does not mean suppressing completely the deformation of the lip portion 54 toward the inner circumferential surface side of the lip portion 54, and means reducing the degree of the deformation of the lip portion 54.

In the above-constructed shaft seal 50, when the pressure in the seal chamber 60, or in the crank chamber 9, is relatively high, the lip portion 54 is deformed toward the inner circumferential surface side of the lip portion 54, or toward the outer circumferential surface side of the drive shaft 8, for example, as shown by the two-dot chain line in FIG. 2. Therefore, the contact area of the lip portion 54 with the outer circumferential surface 8a of the drive shaft 8 does not increase relatively. Namely, the deformation of the lip portion 54 toward the inner circumferential surface of the lip portion 54 by applying the force resulting from the pressure in the seal chamber 60 means the deformation that the inner diameter of the lip portion 54 is reduced from the top portion 54b to the base of the lip portion 54 that is connected with the disc portion 53. The support portion 55 suppresses such deformation by the tensile force from the outer circumferential surface side of the lip portion 54. Furthermore, since the plurality of support portions 55 is arranged in the circumferential direction of the lip portion 54 at the regular interval, the well-balanced suppression against the deformation of the lip portion 54 can be performed.

Meanwhile, when the pressure in the seal chamber 60 increases, it is preferable that the top portion 54b of the lip portion 54 is in contact with the outer circumferential surface 8a of the drive shaft 8 with the strength corresponding to the pressure in the seal chamber 60, that is, the shaft seal 50 performs self-sealing function. For that purpose, the lip portion 54 needs to have flexibility so as to follow the pressure in the seal chamber 60. In the present preferred embodiment, the force resulting from the pressure in the seal chamber 60 is applied to the whole outer circumferential surface 54a of the lip portion 54 other than the part of the outer circumferential surface 54a of the lip portion 54 corresponding to where the support portions 55 are arranged. Also, when the lip portion 54 is mounted around the drive shaft 8, the top portion 54b of the rubber support portion 55 is stretched outwardly by the width corresponding to interference, thereby, bending the support portions 55 slightly. As a result, the lip portion 54 has flexibility. For the reason, the lip portion 54 can be in contact with the outer circumferential surface 8a of the drive shaft 8 in accordance with the pressure in the seal chamber 60, that is, self-sealing function in accordance with the pressure in the seal chamber 60 can be obtained.

As mentioned above, in the shaft seal 50 of the present preferred embodiment, the deformation of the lip portion 54 of the first lip seal 51 is suppressed, and also the lip portion 54 has flexibility. Therefore, abnormal abrasion can be avoided, and appropriate sealing performance can be maintained. The degree of the tensile force against the deformation of the lip portion 54 can be adjusted freely by changing the number and thickness of the support portion 55. Thereby, the flexibility of the lip portion 54 can be adjusted. Furthermore, even when the position of the lip portion 54 is different from a desired position upon mounting the lip portion 54 around the drive shaft 8, for example, even when the rotary axis L of the drive shaft 8 is different from the axis of the lip portion 54, the flexibility of the lip portion 54 absorbs the positional difference.

Furthermore, the top portion 54b of the lip portion 54 is conspicuously easy to abrade. In the present preferred embodiment, the support portion 55 is arranged at the top portion 54b of the lip portion 54 so as to support the top portion 54b of the lip portion 54. Therefore, abrasion of the top portion 54b of the lip portion 54 can be effectively suppressed. Meanwhile, according to the present preferred embodiment, the support portion 55 also can be formed with the fixed portion 52, the disc portion 53 and the lip portion 54 at the same time when the first lip seal 51 is manufactured. Therefore, the first lip seal 51 is advantageous in manufacture.

The present invention is not limited to the above-mentioned preferred embodiment, and various applications and modifications are considered. Following alternative embodiments may be practiced by modifying from the above-mentioned preferred embodiment.

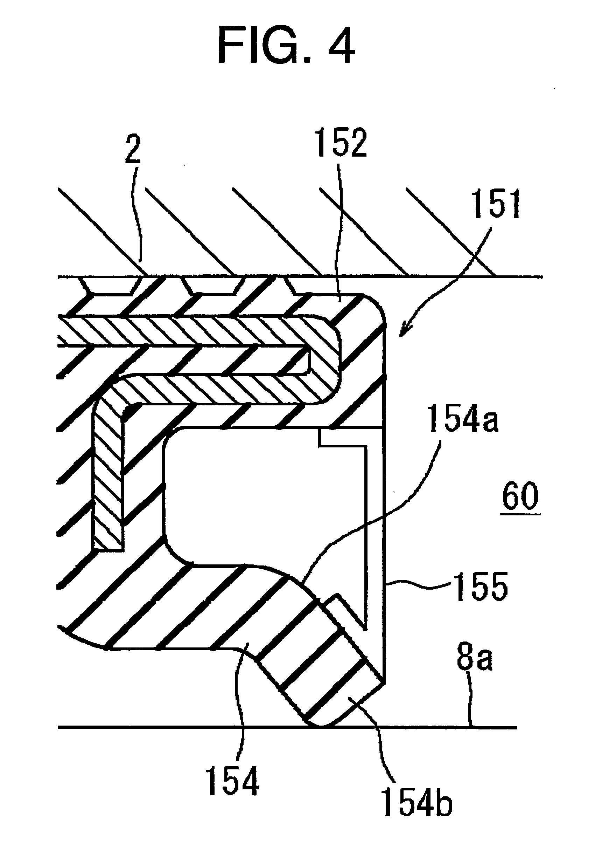

Although the support portion 55 is formed integrally with the fixed portion 52 and the lip portion 54 in the above-mentioned preferred embodiment, the structure of the support portion 55 can be modified according to need. Now, first lips according to the following alternative preferred embodiments will be described by referring to FIGs. 4 through 10. The same elements other than the first lip seal are numbered by the identical reference numerals as those in the above-mentioned preferred embodiment.

In a first alternative preferred embodiment, as shown in FIG. 4, a first lip seal 151 includes a fixed portion 152 and a lip portion 154. In the first lip seal 151, a support portion 155 is arranged between an outer circumferential surface 154a of the lip portion 154 and the fixed portion 152 at a top portion 154b of the lip portion 154. The support portion 155 is made of resin or metal and is formed separately from the fixed portion 152 and the lip portion 154. The support portion 155 forms a rod in shape that extends in the radial direction of the first lip seal 151, and the ends of the support portion 155 are respectively bonded to the lip portion 154 and the fixed portion 152. Namely, the support portion 155 connects the outer circumferential surface 154a of the lip portion 154 with the inner circumferential surface of the fixed portion 152. Also, a plurality of the support portions 155 is arranged in the circumferential direction of the lip portion 154 at an appropriate interval. According to such structure, the substantially same advantageous effects can be obtained as mentioned in the above-mentioned preferred embodiment as shown in FIGs. 2 and 3.

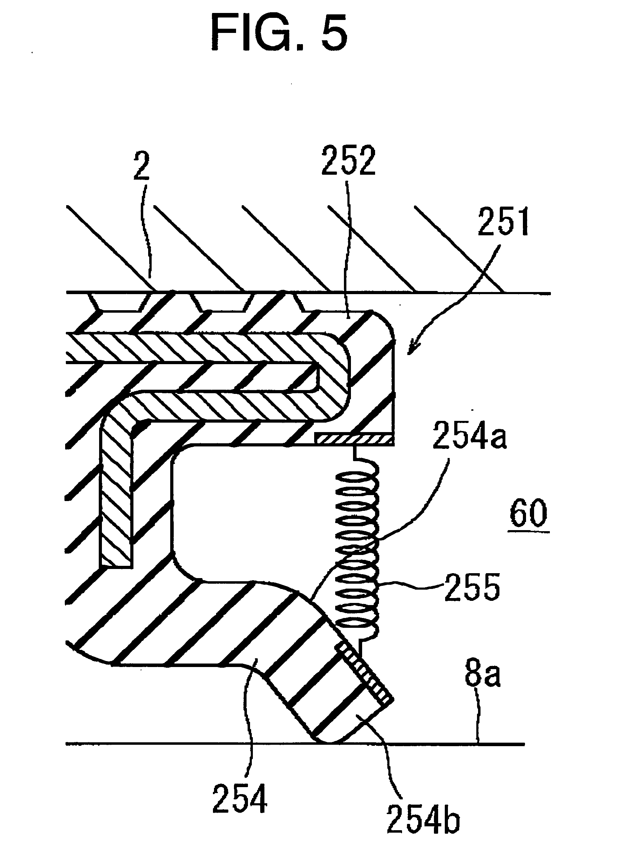

In a second alternative preferred embodiment, as shown in FIG. 5, a first lip seal 251 includes a fixed portion 252 and a lip portion 254. In the first lip seal 251, a support portion 255 is arranged between an outer circumferential surface 254a of the lip portion 254 and the fixed portion 252 at a top portion 254b of the lip portion 254. The support portion 255 is constituted of a coil spring made of metal or resin. The ends of the support portion 255 are respectively bonded to the lip portion 254 and the fixed portion 252. Namely, the support portion 255 connects the outer circumferential surface 254a of the lip portion 254 with the inner circumferential surface of the fixed portion 252. Also, a plurality of the support portions 255 is arranged in the circumferential direction of the lip portion 254 at an appropriate interval. According to such structure, the substantially same advantageous effects can be obtained as mentioned in the above-mentioned preferred embodiment as shown in FIGs. 2 and 3.

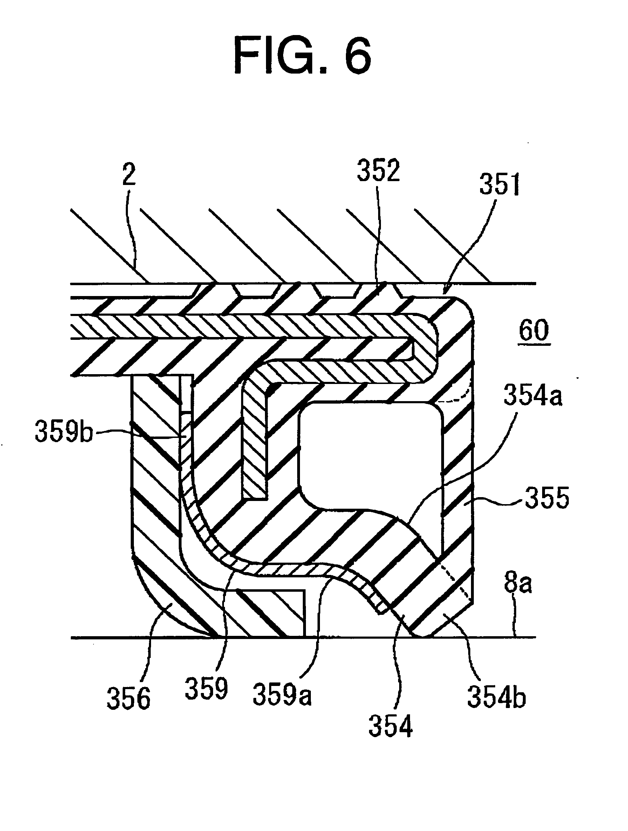

In a third alternative preferred embodiment, as shown in FIG. 6, a first lip seal 351 includes a fixed portion 352 and a lip portion 354. A support portion 355 that is the same support portion as in the above-mentioned preferred embodiment as shown in FIGs. 2 and 3 is formed in the first lip seal 351. In addition, a holding member 359 is arranged at the inner circumferential surface side of the lip portion 354 for holding the lip portion 354. The holding member 359 is made of metal or resin and has a relatively large flexural strength. The holding member 359 includes a holding portion 359a and a disc portion 359b. The holding portion 359a has substantially a cylindrical shape corresponding to the inner circumferential surface of the lip portion 354. The disc portion 359b extends from the holding portion 359a outwardly. The disc portion 359b is axially interposed between the first lip seal 351 and a second lip seal 356. According to such structure, the deformation of the lip portion 354 toward the inner circumferential surface side of the lip portion 354 can be effectively suppressed by cooperation of the support portion 355 and the holding member 359.

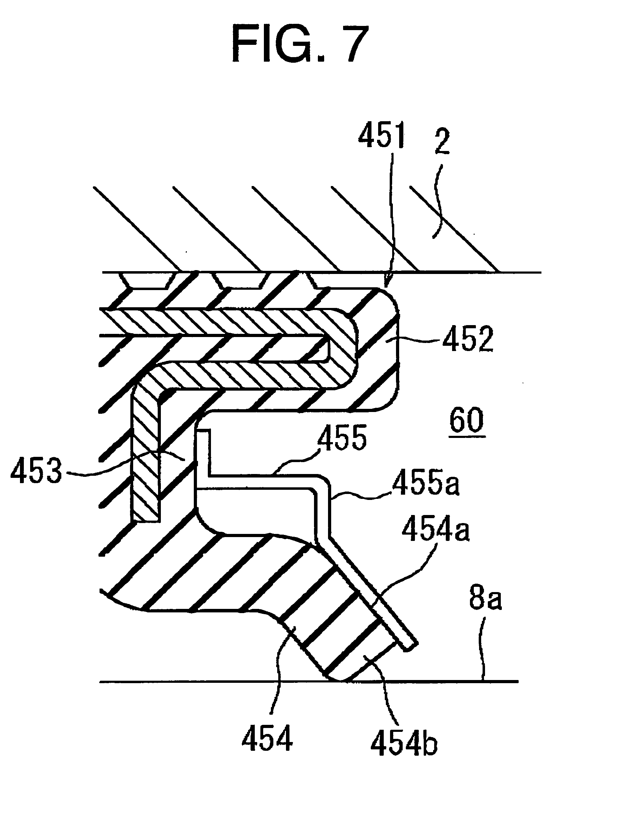

In a fourth alternative preferred embodiment, as shown in FIG. 7, a first lip seal 451 includes a fixed portion 452, a disc portion 453 and a lip portion 454. In the first lip seal 451, a support portion 455 is arranged at the outer circumferential surface side of a top portion 454b of the lip portion 454 and extends in the axial direction of the lip portion 454. The support portion 455 is constituted of a leaf spring that is made of resin or metal. The support portion 455 includes a step portion 455a between the ends of the support portion 455. The ends of the support portion 455 are respectively bonded to the top portion of an outer circumferential surface 454a of the lip portion 454 and the side surface of the disc portion 453. Namely, the support portion 455 connects the outer circumferential surface 454a of the lip portion 454 with the side surface of the disc portion 453. A plurality of the support portions 455 is arranged in the circumferential direction of the lip portion 454. Also according to such structure, the substantially same advantageous effects can be obtained as mentioned in the above-mentioned preferred embodiment as shown in FiGs. 2 and 3.

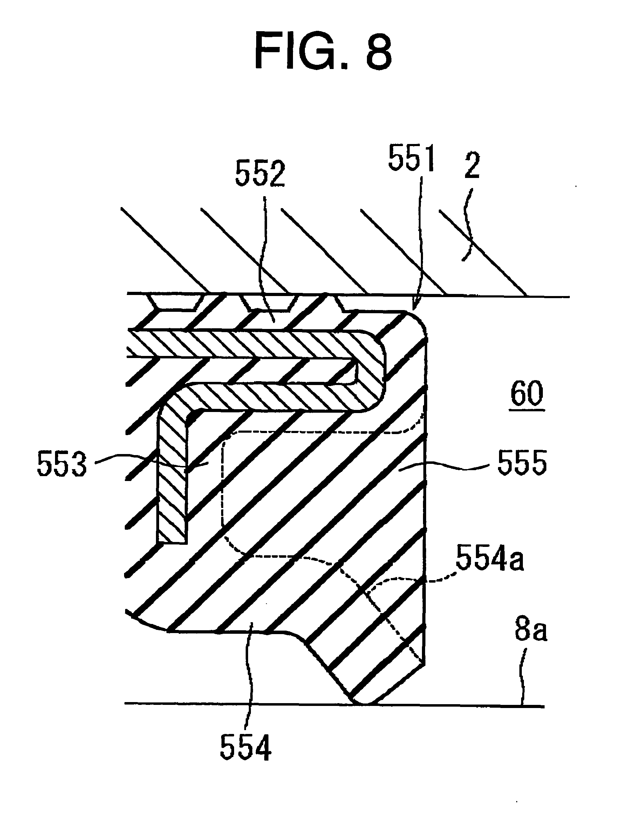

In a fifth alternative preferred embodiment, as shown in FIG. 8, a first lip seal 551 includes a fixed portion 552, a disc portion 553 and a lip portion 554. In the first lip seal 551, a support portion 555 is arranged in a space surrounded by an outer circumferential surface 554a of the lip portion 554, the inner circumferential surface of the fixed portion 552 and the side of the disc portion 453. The support portion 555 connects the outer circumferential surface 554a of the lip portion 554, the inner circumferential surface of the fixed portion 552 and the side of the disc portion 553. In the fifth alternative preferred embodiment, the support portion 555 extends in the radial direction of the first lip seal 551 and forms a thin plate in shape. A plurality of the support portions 555 is arranged in the circumferential direction of the lip portion 554 at a regular interval. The support portion 555 that is constituted of the thin plate is formed integrally with the fixed portion 552, the disc portion 553 and the lip portion 554 at the same time when the first lip seal 551 is manufactured. The outer circumferential surfaces 554a of the lip portion 554 are formed between the thin plates. Also according to such structure, the substantially same advantageous effects can be obtained as mentioned in the above-mentioned preferred embodiment as shown in FIGs. 2 and 3.

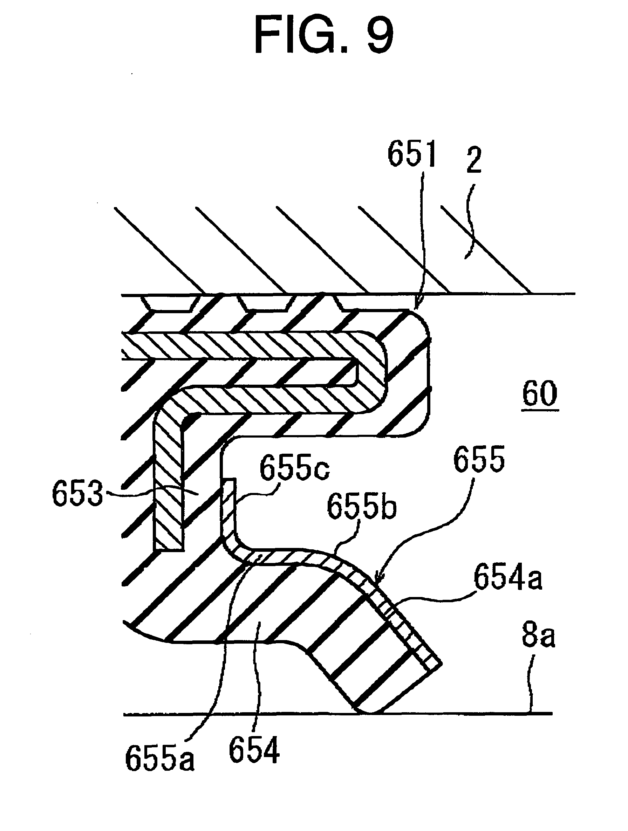

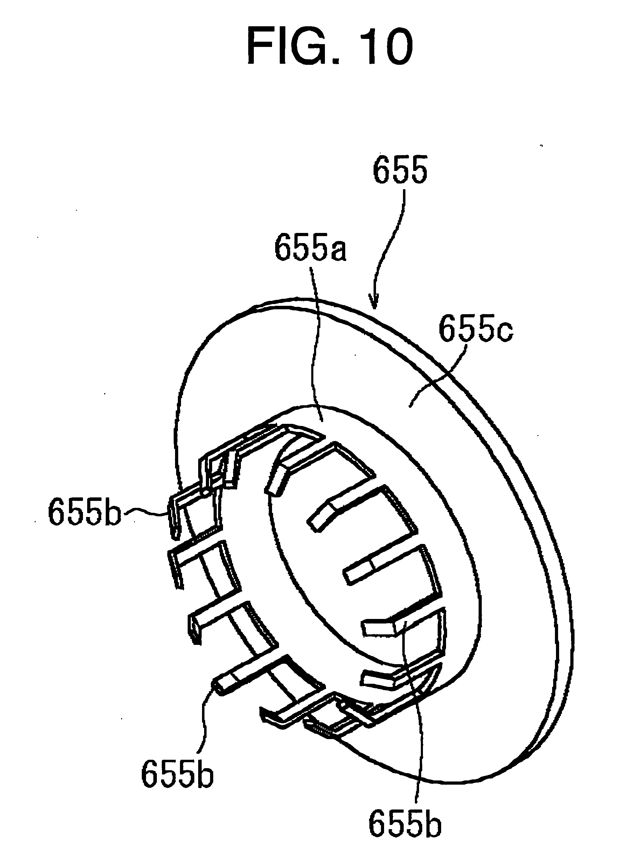

In a sixth alternative preferred embodiment, as shown in FIGs. 9 and 10, a first lip seal 651 includes a disc portion 653 and a lip portion 654. In the first lip seal 651, a support portion 655 includes a cylindrical body 655a made of the resin or metal. The cylindrical body 655a includes a relatively large number of flexible portions 655b that are arranged in the circumferential direction of the cylindrical body 655a at a regular interval and that form substantially teeth of a comb in shape. In the sixth alternative preferred embodiment, the cylindrical body 655a includes fourteen flexible portions 655b. The support portion 655 is fitted such that the cylindrical body 655a covers an outer circumferential surface 654a of the lip portion 654. The flexible portions 655b are bonded to the outer circumferential surface 654a of the lip portion 654. The cylindrical body 655a also includes a flange portion 655c. The flange portion 655c is bonded to the side of the disc portion 653. Namely, the support portion 655 connects the outer circumferential surface 654a of the lip portion 654 with the side surface of the disc portion 653. Also according to such structure, the substantially same advantageous effects can be obtained as mentioned in the above-mentioned preferred embodiment as shown in FIGs. 2 and 3.

Although the shaft seal 50 of the clutchless variable displacement compressor is described in the above-mentioned preferred embodiment, the present invention also can be applied to a shaft seal of a compressor including a clutch mechanism. Furthermore, the present invention can be applied to shaft seals other than shaft seals of compressors.

The present examples and embodiments are to be considered as illustrative and not restrictive, and the invention is not to be limited to the details given herein but may be modified within the scope of the appended claims.

A shaft seal for sealing an outer circumferential surface of a rotary shaft to a housing includes a lip seal. The lip seal includes a lip body, a lip portion, a support portion and a receiving portion. The lip body is fixed at a housing side. The lip portion extends from the lip body and has inner and outer circumferential surfaces. The inner circumferential surface of the lip portion is in contact with the outer circumferential surface of the rotary shaft. The lip portion is deformable. The support portion is formed at the outer circumferential surface side of the lip portion for applying tensile force to the lip portion when the lip portion is deformed toward the inner circumferential surface side of the lip portion. The receiving portion is formed at the outer circumferential surface side of the lip portion for receiving the pressure in the housing.

## Claims

1. A shaft seal, for sealing an outer circumferential surface of a rotary shaft to a housing, having a lip seal that includes a lip body and a lip portion, the lip body being fixed at a housing side, the lip portion extending from the lip body, the lip portion having inner and outer circumferential surfaces, the inner circumferential surface of the lip portion being in contact with the outer circumferential surface of the rotary shaft, the lip portion being deformable, **characterized in that** the lip seal further includes a support portion and a receiving portion, the support portion being formed at the outer circumferential surface side of the lip portion for applying tensile force to the lip portion when the lip portion is deformed toward the inner circumferential surface side of the lip portion, the receiving portion being formed at the outer circumferential surface side of the lip portion for receiving the pressure in the housing.

2. The shaft seal according to claim 1, wherein the support portion is arranged at the top end of the lip portion.

3. The shaft seal according to claim 1 or 2, wherein a plurality of the support portions is arranged in the circumferential direction of the lip portion at a predetermined interval.

4. The shaft seal according to any one of claims 1 through 3, wherein the support portion connects the outer circumferential surface of the lip portion with the lip body.

5. The shaft seal according to claim 4, wherein the support portion is formed integrally with the lip body and the lip portion.

6. The shaft seal according to claim 4, wherein the support portion is formed separately from the lip body and lip portion.

7. The shaft seal according to any one of claims 1 through 4, wherein the support portion is constituted of elastic member.

8. The shaft seal according to claim 7, wherein the elastic member is made of one of rubber, resin and metal.

9. The shaft seal according to claim 7, wherein the elastic member is one of a coil spring and a leaf spring.

10. The shaft seal according to any one of claims 1 through 5 and 7, wherein the support portion forms a rod having one of rectangular and circular transverse cross sections in shape.

11. The shaft seal according to any one of claims 1 through 5 and 7, wherein the support portion forms a thin plate in shape.

12. The shaft seal according to any one of claims 1 through 11, **characterized in that** a holding member is arranged at the inner circumferential surface side of the lip portion for holding the lip portion.

13. A compressor having a housing, a compression mechanism, a drive shaft and the shaft seal according to any one of claims 1 through 12, wherein the compression mechanism is placed in the housing for compressing refrigerant, the drive shaft being rotatably supported by the housing for driving the compression mechanism, the shaft seal being interposed between the housing and the drive shaft for sealing an outer circumferential surface of the drive shaft to the housing.

## Amended claims

### Amended claims in accordance with Rule 86(2) EPC.

**14.** A method for sealing an outer circumferential surface of a rotary shaft to a housing, **characterized by**:
interposing a lip seal having a lip portion between the housing and the rotary shaft;
contacting the lip portion with an outer circumferential surface of the rotary shaft;
forming a support portion at an outer circumferential surface side of the lip portion so as to apply tensile force to the lip portion when the lip portion is deformed toward an inner circumferential surface side of the lip portion; and
forming a receiving portion at the outer circumferential surface side of the lip portion so as to receive the pressure in the housing.
